(19) **Europäisches Patentamt / European Patent Office / Office européen des brevets**

(11) **EP 4 198 848 A1**

(12) # EUROPEAN PATENT APPLICATION
published in accordance with Art. 153(4) EPC

(43) Date of publication:
**21.06.2023 Bulletin 2023/25**

(21) Application number: **21855311.3**

(22) Date of filing: **13.07.2021**

(51) International Patent Classification (IPC):
**G06Q 10/04** (2023.01)

(52) Cooperative Patent Classification (CPC):
**G06N 3/04; G06Q 10/04**

(86) International application number:
**PCT/CN2021/105931**

(87) International publication number:
**WO 2022/033258 (17.02.2022 Gazette 2022/07)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **14.08.2020 CN 202010818836**

(71) Applicants:
• **Center for Excellence in Molecular Cell Science, Chinese Academy of Sciences**
  **Shanghai 200031 (CN)**
• **Chen, Pei**
  **Guangzhou, Guangdong 510640 (CN)**

• **Liu, Rui**
  **Guangzhou, Guangdong 510640 (CN)**

(72) Inventors:
• **CHEN, Luonan**
  **Shanghai 200031 (CN)**
• **CHEN, Pei**
  **Guangzhou, Guangdong 510640 (CN)**
• **LIU, Rui**
  **Guangzhou, Guangdong 510640 (CN)**

(74) Representative: **Modiano, Gabriella Diana et al**
  **Modiano & Partners (DE)**
  **Steinsdorfstrasse, 14**
  **80538 München (DE)**

(54) **METHOD AND SYSTEM FOR MULTI-STEP PREDICTION OF FUTURE WIND SPEED BASED ON AUTOMATIC RESERVOIR NEURAL NETWORK**

(57) The invention discloses a multi-step prediction method and system of future wind speed based on automatic reservoir neural network, realizes accurate and fast multi-step prediction of future information, maintains high robustness to noise and system time-varying, and avoids over-fitting problems. The technical scheme is: for short-term high-dimensional wind speed data, based on the delay embedding theory, the observed high-dimensional dynamics is used as the reservoir by using space-time information transformation, and the high-dimensional wind speed data is mapped to the future information of the target variable. The automatic reservoir neural network realizes the multi-step prediction of the target variable by solving a pair of conjugate space-time information interaction equations.

EP 4 198 848 A1

```
                         ┌─────────────────────┐
                         │        BEGIN        │
                         └─────────────────────┘
                                   │
                                   ▼
┌───────────────────────────────────────────────────────────────┐
│     According to the characteristics of wind speed data       │
│      input, construct short-term high-dimensional data,       │
│  determine the target variable to be predicted, the length    │
│   of the known time series, and the length to be predicted    │
└───────────────────────────────────────────────────────────────┘
                                   │
                                   ▼
┌───────────────────────────────────────────────────────────────┐
│    Construct high-dimensional short-term series matrix,       │
│   delay embedding matrix and space-time information STI        │
│  conjugate equation, wherein the space-time information        │
│    STI conjugate equation includes coefficient matrix         │
└───────────────────────────────────────────────────────────────┘
                                   │
                                   ▼
┌───────────────────────────────────────────────────────────────┐
│ Randomly set the weight of neural network F, and by using     │
│ neural network F as the reservoir stratum for reservoir       │
│ calculation, update the coefficient matrix in space-time      │
│              information STI conjugate equation                │
└───────────────────────────────────────────────────────────────┘
                                   │
                                   ▼
┌───────────────────────────────────────────────────────────────┐
│    Based on the space-time information STI conjugate          │
│      equation of ARNN constructed in step2, solve the         │
│   coefficient matrices A and B in space-time information      │
│ STI conjugate equation by using the encoding and decoding     │
│    of data, and finally obtain the predicted value of the     │
│              target variable to be predicted                  │
└───────────────────────────────────────────────────────────────┘
                                   │
                                   ▼
                         ┌─────────────────────┐
                         │         END         │
                         └─────────────────────┘
```

# FIG 1

**Description**

**Technical field**

The invention relates to artificial intelligence field, specifically relates to a multi-step prediction method and system of future wind speed based on automatic reservoir neural network.

**Background**

The prediction of wind speed is always fascinating and attractive. However, due to the nonlinearity of the wind speed system and the lack of information, it is a challenging task to predict the nonlinear dynamic system such as wind speed only in the short-term time series. Although many methods including statistical regression (such as ARIMA12, Robust regression), exponential smoothing and machine learning (such as Long Short-Term Memory: LSTM), have been applied to the problem of predictability, most existing methods need to carry out enough observations or long-term time series. Thus, it is impossible to reliably predict the change of wind speed in short-term time series using small samples. On the other hand, neural networks including recurrent neural networks (RNN) and LSTM may theoretically learn the nonlinear dynamics of wind speed from the observed data, and have been used in time series prediction based on phase space embedding strategy. However, when only short-term time series was used for practice the networks, the above methods usually encounter over-fitting problems. In addition, practicing neural networks will consume a lot of time and computing resources, such as the problem of gradient disappearance caused by a lot of feedback from neurons, which also hinders the application of traditional neural network methods in many practical systems.

At present, there are few prediction methods for short-term high-dimensional wind speed data, but this short-term wind speed series prediction is natural and important. Firstly, short-term high-dimensional wind speed data is widely available in the real world. Secondly, because the wind speed system in the real world has time-varying non-stationary characteristics, the latest short-term series describe the future time characteristics of the complex system more accurately than the long-term series containing remote historical information. Therefore, even if long-term data is measured, the truly effective prediction mainly depends on its recent short-term data. Thirdly, because the measurable short-term high-dimensional data has rich information, the dynamics of these variables are intertwined, and used for prediction. Actually, when the steady state is assumed to be contained in a low-dimensional manifold, for many high-dimensional wind speed systems that satisfied the actual situation, the space-time information (STI) transformation is theoretically obtained by the delay embedding theory. The theory transforms the space information of high-dimensional data into the time information of any target variable. On the basis of STI transformation, a random distribution embedding (RDE) framework is developed to predict the distribution of values by separately constructing multiple STI maps to form a step-by-step prediction of short-term high-dimensional time series. Besides, there are methods to perform multi-step advance prediction by using multi-layer neural network as STI transformation. But there are still two unsolved problems in the short-term high-dimensional wind speed prediction: one is the computing cost, and the other is the robustness.

**Summary of Invention**

A brief overview of one or more aspects is given below to provide a basic understanding of these aspects. This overview is not an exhaustive overview of all aspects envisaged, nor is it intended to identify the key or decisive elements in all aspects nor attempt to define the scope of any or all aspects. Its only purpose is to present some concepts of one or more aspects in a simplified form so as to give a more detailed description given later.

The purpose of the invention is to solve the above problems, and provide a multi-step prediction method and system of future wind speed based on automatic reservoir neural network, which not only realizes accurate and fast multi-step prediction of future information, but also maintains high robustness to noise and system time-varying and avoids over-fitting problems.

The technical scheme of the invention is: the invention discloses a multi-step prediction method of future wind speed based on automatic reservoir neural network. The method comprises:

   step1: according to the characteristics of wind speed data input, construct short-term high-dimensional data, determine the target variable to be predicted, the length of the known time series, and the length to be predicted from short-term high-dimensional data;
   step2: construct high-dimensional short-term series matrix, delay embedding matrix and space-time information STI conjugate equation, in which space-time information STI conjugate equation includes coefficient matrix;
   step3: randomly set the weight of neural network F, and by using neural network F as the reservoir stratum for reservoir calculated, update the coefficient matrix in space-time information STI conjugate equation;
   step4: based on the space-time information STI conjugate equation of ARNN constructed in step2, solve the coefficient matrix in space-time information STI conjugate equation by using the encoding and decoding of data, and finally obtain the predicted value of the target variable to be predicted.

According to an embodiment of the multi-step prediction method of future wind speed based on automatic reservoir neural network, step1 further comprises:

given that the length is $m$, the dimension is $n$, and a high-dimensional wind speed time series is

$X^t = [x_1^t, \cdots, x_n^t]'_{t=1,2,\ldots,m}$ , wind speed y of target monitoring station to be predicted is any one of measured speeds of the $x_1,x_2,\ldots,x_n$ wind speed monitoring stations with similar geographical locations, that is $y = x_k$, $k$ represents the subscript of the target monitoring station, which is any one of 1~n;

select the wind speed monitoring station variable with the most correlation with the target variable y: from high-dimensional wind speed time series $X^t$, select relevant variables or eliminate irrelevant variables to improve the performance of ARNN, for the given high-dimensional wind speed time series $X^t$, calculate the mutual information

between time series $\{x_i^1, x_i^2, \ldots, x_i^m\}_{i=1,2,\ldots,k-1,k+1,\ldots,n}$ and $\{y^1, y^2, \ldots, y^m\}$, and select the D variables $\{x_1, x_2, \ldots, x_D\}$ $(D \leq n)$ with the most correlation with the target variable y.

According to an embodiment of the multi-step prediction method of future wind speed based on automatic reservoir neural network, step2 further comprises:
for the high-dimensional short time series matrix $X^t$ composed of the following D relevant variables

$$X^t = \begin{pmatrix} x_1^t \\ x_2^t \\ \vdots \\ x_D^t \end{pmatrix}_{t=1,2,\ldots,m} .$$

By processing the randomly given neural network F, the matrix $X^t$ is converted into a $\tilde{D}$-dimensional variable $F(X^t) = [F_1(X^t), \cdots, F_{\tilde{D}}(X^t)]'$, and obtain a following space-time information STI conjugate equation of ARNN:

$$\begin{cases} A_{L \times \tilde{D}}[F(X^1) \quad F(X^2) \quad \cdots \quad F(X^m)]_{\tilde{D} \times m} = Y_{L \times m} \\ B_{\tilde{D} \times L} Y_{L \times m} = [F(X^1) \quad F(X^2) \quad \cdots \quad F(X^m)]_{\tilde{D} \times m} \quad , \\ \qquad A_{L \times \tilde{D}} B_{\tilde{D} \times L} = I_{L \times L} \end{cases}$$

where $Y_{L \times m}$ is delay embedding matrix, $I_{L \times L}$ is identity matrix, the coefficient matrices $A_{L \times \tilde{D}}$ and $B_{\tilde{D} \times L}$ are unknown, future information is the target variable y, that is $\{y^{m+1}, y^{m+2}, \ldots, y^{m+L-1}\}$;
the delay embedding matrix is constructed as follows:

$$Y_{L \times m} = \begin{pmatrix} y^1 & y^2 & \cdots & y^m \\ y^2 & y^3 & \cdots & y^{m+1} \\ \vdots & \vdots & \ddots & \vdots \\ y^L & y^{L+1} & \cdots & y^{m+L-1} \end{pmatrix}_{L \times m} ,$$

where L is the number of delayed embedding, $L$-1 is the number of predicted steps.

According to an embodiment of the multi-step prediction method of future wind speed based on automatic reservoir neural network, step3 further comprises:

select $k$ $(k < \tilde{D})$ variables randomly from $[F_1(X^t) \cdots F_{\tilde{D}}(X^t)]^T$, and solve the following equation:

$$\tilde{A}_{L \times k}[F(X^1) \quad F(X^2) \quad \cdots \quad F(X^m)]_{k \times m} = Y_{L \times m},$$

$$\tilde{B}_{k \times L} Y_{L \times m} = [F(X^1) \quad F(X^2) \quad \cdots \quad F(X^m)]_{k \times m},$$

$$\tilde{A}_{L \times k} \tilde{B}_{k \times L} = I_{L \times L},$$

where $\tilde{A}_{L \times k}$ is a submatrix of the coefficient matrix $A_{L \times \tilde{D}}$, $\tilde{B}_{k \times L}$ is a submatrix of the coefficient matrix $\tilde{B}_{D \times L}$;
update the coefficient matrix $B_{\tilde{D} \times L}$ by the following criteria:

if the initial element $b_{ij}$ is empty, directly replace $b_{ij}$ with solution $\tilde{b}_{i^*j^*}$ in equation $\tilde{B}_{k \times L} Y_{L \times m} = [F(X^1)\ F(X^2) \cdots F(X^m)]_{k \times m}$; if the initial element $b_{ij}$ is not empty, set $b_{ij} = \frac{b_{ij} + \tilde{b}_{i^*j^*}}{2}$ .

According to an embodiment of the multi-step prediction method of future wind speed based on automatic reservoir neural network, step4 further comprises:

solve and determine the coefficient matrices A and B: repeat step3 above, update matrix $B_{\tilde{D} \times L} = (b_{ij})_{\tilde{D} \times L}$ by iteration. When a certain iteration meets the setting convergence conditions, the coefficient matrix $B_{\tilde{D} \times L}$ is finally determined, and $A_{L \times \tilde{D}} = (a_{ij})_{\tilde{D} \times L}$ is determined according to the following formula:

$$A_{L \times \tilde{D}} \cdot [F(X)|B_{\tilde{D} \times L}] = [Y_{L \times m}|I_{L \times L}],$$

where $[F(X)|B_{\tilde{D} \times L}]$ and $[Y_{L \times m}|I_{L \times L}]$ are augmented matrices;
when the coefficient matrices A and B are known, solve the unknown part of the target variable y.

The invention also discloses a multi-step prediction system of future wind speed based on automatic reservoir neural network. The system comprises:

Target variable building module, according to the characteristics of wind speed data input, constructs short-term high-dimensional data, determines the target variable to be predicted, the length of the known time series, and the length to be predicted from short-term high-dimensional data;
Conjugate equation building module, constructs high-dimensional short-term series matrix, delay embedding matrix and space-time information STI conjugate equation, in which space-time information STI conjugate equation includes coefficient matrix;
Coefficient matrix updating module, randomly sets the weight of neural network F, and by using neural network F as the reservoir stratum for reservoir calculated, updates the coefficient matrix in space-time information STI conjugate equation;
Target variable prediction module, based on the space-time information STI conjugate equation of ARNN constructed, solves the coefficient matrix in space-time information STI conjugate equation by using the encoding and decoding of data, and finally obtains the predicted value of the target variable to be predicted.

According to an embodiment of the multi-step prediction system of future wind speed based on automatic reservoir neural network, the target variable building module is further configured as:

given length is $m$, with dimension $n$, high-dimensional wind speed time series is $X^t = [x_1^t, \quad \cdots, \quad x_n^t]'_{t=1,2,\ldots,m}$, wind speed y of target monitoring station to be predicted is any one of $x_1, x_2, \ldots, x_n$ wind speed monitoring stations with similar geographical locations, that is $y = x_k$, $k$ represents the subscript of the target monitoring station, which is any one of 1-n;

select the wind speed monitoring station variable with the most correlation with the target variable y: from high-dimensional wind speed time series $X^t$, select relevant variables or eliminate irrelevant variables to improve the performance of ARNN, for the given high-dimensional wind speed time series $X^t$, calculate the mutual information

between time series $\{x_i^1, x_i^2, \ldots, x_i^m\}_{i=1,2,\ldots,k-1,k+1,\ldots,n}$ and $\{y^1, y^2, \ldots, y^m\}$, and select the $D$ variables $\{x_1, x_2, \ldots, x_D\}$ $(D \le n)$ with the most correlation with the target variable y.

According to an embodiment of the multi-step prediction system of future wind speed based on automatic reservoir neural network, the conjugate equation building module is further configured as:
for the high-dimensional short time series matrix $X^t$ composed of the following D relevant variables

$$X^t = \begin{pmatrix} x_1^t \\ x_2^t \\ \vdots \\ x_D^t \end{pmatrix}_{t=1,2,\ldots,m} .$$

By processing the randomly given neural network F, the matrix $X^t$ is converted into a $\tilde{D}$-dimensional variable $F(X^t) = [F_1(X^t), \cdots, F_{\tilde{D}}(X^t)]'$, and obtain a following space-time information STI conjugate equation of ARNN:

$$\begin{cases} A_{L \times \tilde{D}}[F(X^1) \quad F(X^2) \quad \cdots \quad F(X^m)]_{\tilde{D} \times m} = Y_{L \times m} \\ B_{\tilde{D} \times L} Y_{L \times m} = [F(X^1) \quad F(X^2) \quad \cdots \quad F(X^m)]_{\tilde{D} \times m} \quad , \\ \qquad\qquad A_{L \times \tilde{D}} B_{\tilde{D} \times L} = I_{L \times L} \end{cases}$$

where $Y_{L \times m}$ is delay embedding matrix, $I_{L \times L}$ is identity matrix, the coefficient matrices $A_{L \times \tilde{D}}$ and $B_{\tilde{D} \times L}$ are unknown, future information is the target variable y, that is $\{y^{m+1}, y^{m+2}, \ldots, y^{m+L-1}\}$;
the delay embedding matrix is constructed as follows:

$$Y_{L \times m} = \begin{pmatrix} y^1 & y^2 & \cdots & y^m \\ y^2 & y^3 & \cdots & y^{m+1} \\ \vdots & \vdots & \ddots & \vdots \\ y^L & y^{L+1} & \cdots & y^{m+L-1} \end{pmatrix}_{L \times m} ,$$

where L is the number of delayed embedding, $L$-1 is the number of predicted steps.

According to an embodiment of the multi-step prediction system of future wind speed based on automatic reservoir neural network, the coefficient matrix updating module is further configured as:

select $k$ $(k < 5)$ variables randomly from $[F_1(X^t) \cdots F_{\tilde{D}}(X^t)]^T$, and solve the following equation:

$$\tilde{A}_{L \times k}[F(X^1) \quad F(X^2) \quad \cdots \quad F(X^m)]_{k \times m} = Y_{L \times m},$$

$$\tilde{B}_{k \times L} Y_{L \times m} = [F(X^1) \quad F(X^2) \quad \cdots \quad F(X^m)]_{k \times m},$$

$$\tilde{A}_{L \times k} \tilde{B}_{k \times L} = I_{L \times L},$$

where $\tilde{A}_{L \times k}$ is a submatrix of the coefficient matrix $A_{L \times \tilde{D}}$, $\tilde{B}_{k \times L}$ is a submatrix of the coefficient matrix $B_{\tilde{D} \times L}$;
update the coefficient matrix $B_{\tilde{D} \times L}$ by the following criteria:
if the initial element $b_{ij}$ is empty, directly replace $b_{ij}$ with solution $\tilde{b}_{i^*j^*}$ in equation $\tilde{B}_{k \times L} Y_{L \times m} = [F(X1) \ F(X^2) \cdots F(X^m)]$

$_{k \times m}$; if the initial element $b_{ij}$ is not empty, set $b_{ij} = \dfrac{b_{ij} + \tilde{b}_{i^*j^*}}{2}$ .

According to an embodiment of the multi-step prediction system of future wind speed based on automatic reservoir neural network, the target variable prediction module is further configured as:

solve and determine the coefficient matrices A and B: repeat step3 above, update matrix $B_{\tilde{D}\times L} = (b_{ij})_{\tilde{D}\times L}$ by iteration. When a certain iteration meets the setting convergence conditions, the coefficient matrix $B_{\tilde{D}\times L}$ is finally determined, and $A_{L\times\tilde{D}} = (a_{ij})_{\tilde{D}\times L}$ is determined according to the following formula:

$$A_{L\times\tilde{D}} \cdot [F(X)|B_{\tilde{D}\times L}] = [Y_{L\times m}|I_{L\times L}],$$

where $[F(X)|B_{\tilde{D}\times L}]$ and $[Y_{L\times m}|I_{L\times L}]$ are augmented matrices;
when the coefficient matrices A and B are known, solve the unknown part of the target variable y.

Compared with prior art, the invention has the following beneficial effects: the method and system of the invention aim at the short-term high-dimensional wind speed data, based on the delay embedding theory, use the space-time information transformation, take the observed high-dimensional dynamics as the reservoir, map the high-dimensional wind speed data to the future information of the target variable, and accurately forecast the target variable in multiple steps. By solving a pair of conjugate space-time information interaction equations at the same time, the automatic reservoir neural network not only realizes accurate and fast multi-step prediction of future information, but also maintains high robustness and avoids over-fitting problems. By taking the observed dynamics themselves as the reservoir, the automatic reservoir neural network ensures the high efficiency of reservoir calculation and explores the inherent low-dimensional dynamics of the target system at the same time. Furthermore, a large number of calculations reflect that the ARNN calculation results are still stable even when the wind speed data is subject to large noise interference and the system is time-varying. The automatic reservoir neural network has been successfully applied to real wind speed data sets, showing excellent prediction results, which shows that the algorithm has great potential in the development of artificial intelligence and machine learning.
In general, the invention has the following characteristics and technical effects:

1) The invention is aimed at a section of wind speed data measured by multiple monitoring stations with similar geographical locations at the same time as the original input. Because the wind speed system in the real world has time-varying non-stationary characteristics, the latest short-term series describe the future time characteristics of complex systems more accurately than the long-term series containing remote historical information.
2) The invention calculates reservoir structure and space-time information STI transformation in combination with reservoir, uses the observed dynamics of high- dimensional data as a repository, utilizes the internal dynamics of the observation/target system; Through STI transformation, the space information of high-dimensional data is converted into the time/dynamic information of any target variable, thus solving the problem of small sample size. The main form and conjugate form of STI equation are used to encode and decode the time dynamics of high-dimensional wind speed data.
3) The invention avoids the over-fitting problem. Practicing traditional neural networks will consume a lot of time and computing resources, such as the problem of gradient disappearance caused by a lot of feedback from neurons, which makes it difficult for traditional neural network methods to be applied in many practical systems on a large scale. Based on the reservoir structure, ARNN only needs to train fewer parameters, so it does not need too many samples.
4) The multi-step future prediction method of wind speed for multiple monitoring stations provided by the invention has the characteristics of accuracy, robustness and energy saving. The invention separately tests the system with time variation and under noise interference, and proves that the ARNN method has good prediction effect for wind speed.

**Brief Description of the Drawings**

After reading the detailed description of the disclosed embodiments in conjunction with the drawings below the above characteristics and advantages of the invention can be better understood. In the drawings, the components are not necessarily drawn to scale, and components with similar related characteristics or features may have the same or similar references.

Fig1 shows the flow chart of an embodiment of the multi-step prediction method of future wind speed based on automatic reservoir neural network of the invention.
Fig2 shows the schematic diagram of an embodiment of the multi-step prediction system of future wind speed based on automatic reservoir neural network of the invention.

**Detailed Description**

The invention is described in detail below in combination with the drawings and specific embodiments. Note that the following aspects described in connection with the drawings and specific embodiments are only illustrative, and should not be understood as limiting the scope of protection of the invention.

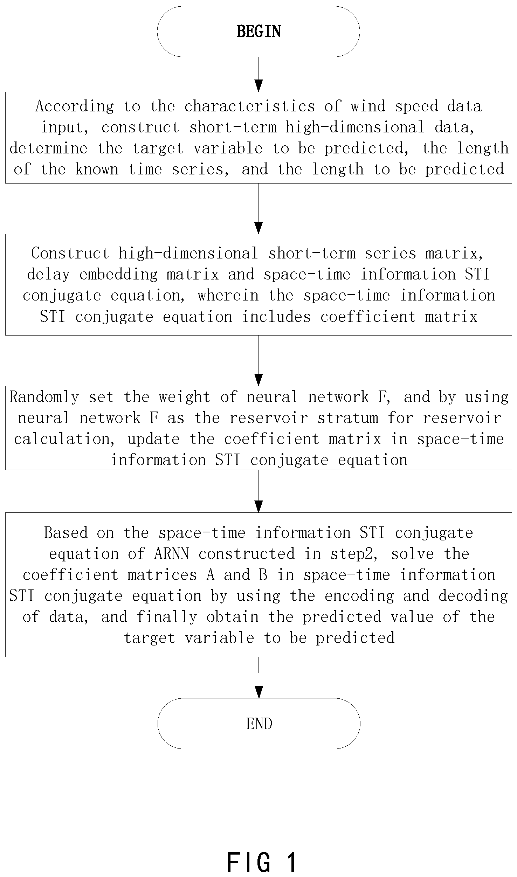

Fig1 shows the flow path of an embodiment of the multi-step prediction method of future wind speed based on automatic reservoir neural network (Auto-Reservoir Neural Network, ARNN) of the invention. Please refer to Fig1, the implementation steps of the prediction method in this embodiment are detailed as follows. For easy understanding, in the specific description of each step of the embodiment, take the wind speed measured by 155 wind speed monitoring stations in the Wakkanai region of Japan as an example.

Step1: according to the characteristics of wind speed data input, construct short-term high-dimensional data, determine the target variable to be predicted, the length of the known time series, and the length to be predicted.

Given that: a length is $m$ and a dimension is $n$, a high-dimensional wind speed time series is

$$X^t = [x_1^t, \quad \cdots, \quad x_n^t]'_{t=1,2,\ldots,m}$$

, a wind speed y of a target monitoring station to be predicted is any one of measured speeds of the $x_1, x_2, \ldots, x_n$ wind speed monitoring stations with similar geographical locations, that is $y = x_k$, $k$ represents the subscript of the target monitoring station, which is any one of 1~n.

Select the wind speed monitoring station variable with the most correlation with the target variable y: from high-dimensional wind speed time series, selecting relevant variables or eliminate irrelevant variables (independent of the target variable y) will significantly improve the performance of ARNN. For the given high-dimensional wind speed time series, calculate the mutual information between time series $\{x_i^1, x_i^2, \ldots, x_i^m\}_{i=1,2,\ldots,k-1,k+1,\ldots,n}$ and $\{y^1, y^2, \ldots, y^m\}$, and select the D variables $\{x_1, x_2, \ldots, x_D\}$ ($D \leq$ n)with the most correlation with the target variable y.

In one example, construct a 155 dimensional high dimensional dynamic system: $X(t) = G(X(t);P(t))$, the system contains 155 dimensional time series variables $X(t) = (x_1^t, \ldots, x_{155}^t)'$ , select any one of the time series variables as the target variable $y$. $P(t)$ is a parameter, the 155-dimensional variables of the coupling system and the target variable y have great correlation. We take the known time series length m = 110, the length to be predicted L - 1 = 45.

Step2: construct a high-dimensional short-term series matrix, a delay embedding matrix and space-time information STI conjugate equation, in which the space-time information STI conjugate equation includes a coefficient matrix.

The high-dimensional short-term series matrix in step 2 represents the input; the delay embedding matrix contains a future prediction interval of the target variable, representing the output; the space-time information STI conjugate equation builds a bridge between the previous two, and realizes the transform from time to space.

The process of building the space-time information STI conjugate equation of ARNN is as follows.

The input is the following D relevant variables (1), that is, the high-dimensional short-term series matrix $X^t$.

$$X^t = \begin{pmatrix} x_1^t \\ x_2^t \\ \vdots \\ x_D^t \end{pmatrix}_{t=1,2,\ldots,m} \qquad (1)$$

By processing of a randomly given neural network F, the $X^t$ is converted into a $\tilde{D}$-dimensional variable $F(X^t) = [F_1(X^t), \cdots, F_{\tilde{D}}(X^t)]'$, therefore, it is capable of obtaining a following space-time information STI conjugate equation of ARNN:

$$\begin{cases} A_{L \times \tilde{D}}[F(X^1) \quad F(X^2) \quad \cdots \quad F(X^m)]_{\tilde{D} \times m} = Y_{L \times m} \\ B_{\tilde{D} \times L} Y_{L \times m} = [F(X^1) \quad F(X^2) \quad \cdots \quad F(X^m)]_{\tilde{D} \times m} \quad (2) \\ \qquad A_{L \times \tilde{D}} B_{\tilde{D} \times L} = I_{L \times L} \end{cases}$$

Where $I_{L \times L}$ is identity matrix. In equation (2) above, the coefficient matrices $A_{L \times \tilde{D}}$ and $B_{\tilde{D} \times L}$ are unknown, future information is y, that is $\{y^{m+1}, y^{m+2}, \ldots, y^{m+L-1}\}$.

Build the delay embedding matrix Y as follows:

$$Y_{L \times m} = \begin{pmatrix} y^1 & y^2 & \cdots & y^m \\ y^2 & y^3 & \cdots & y^{m+1} \\ \vdots & \vdots & \ddots & \vdots \\ y^L & y^{L+1} & \cdots & y^{m+L-1} \end{pmatrix}_{L \times m}$$

In this step, $L$ is the number of delayed embeddings, $L$-1 is the number of predicted steps, the coefficient matrix $A_{L \times \tilde{D}}$ and $B_{\tilde{D} \times L}$ are set as empty matrices (they will be updated in subsequent step3 and step4).

In one example, giving a four-layer neural network $F$ randomly, after the nonlinear transformation of $F$, the 155-dimensional time series variable $X^t$ is converted to the $\tilde{D}$-dimensional (e.g., 100-dimensional) variable $F(X^t) = [F_1(X^t), \cdots, F_{\tilde{D}}(X^t)]'$. Therefore, it is capable of obtaining a following space-time information STI conjugate equation of ARNN:

$$\begin{cases} A_{46 \times 100}[F(X^1) \quad F(X^2) \quad \cdots \quad F(X^{50})]_{100 \times 110} = Y_{46 \times 110} \\ B_{100 \times 46} Y_{46 \times 110} = [F(X^1) \quad F(X^2) \quad \cdots \quad F(X^{50})]_{100 \times 110} \\ A_{46 \times 100} B_{100 \times 46} = I_{46 \times 46} \end{cases}$$

Where $I_{46 \times 46}$ is identity matrix. In this step, the matrices $A_{46 \times 100}$ and $B_{100 \times 46}$ are set as empty matrices.

Step3: randomly set the weight of neural network F, and by using neural network F as the reservoir stratum for reservoir calculation, update the coefficient matrix in space-time information STI conjugate equation.

Step3 uses the idea of reservoir calculation to avoid large-scale parameter fitting and make small sample prediction possible, thus reducing the cost of computing time.

Update the coefficient matrix B through the following dropout scheme. Select $k$ ($k < \tilde{D}$) variables randomly from $[F_1(X^t) \cdots F_{\tilde{D}}(X^t)]^T$. Solve the following equation:

$$\tilde{A}_{L \times k}[F(X^1) \quad F(X^2) \quad \cdots \quad F(X^m)]_{k \times m} = Y_{L \times m} \quad (3)$$

$$\tilde{B}_{k \times L} Y_{L \times m} = [F(X^1) \quad F(X^2) \quad \cdots \quad F(X^m)]_{k \times m} \quad (4)$$

$$\tilde{A}_{L \times k} \tilde{B}_{k \times L} = I_{L \times L} \quad (5)$$

Where $\tilde{A}_{L \times k}$ is a submatrix of the coefficient matrix $A_{L \times \tilde{D}}$, $\tilde{B}_{k \times L}$ is a submatrix of the coefficient matrix $B_{\tilde{D} \times L}$. Update the coefficient matrix $B_{\tilde{D} \times L}$ by the following criteria:

The criteria content:

if the initial element $b_{ij}$ is empty, directly replace $b_{ij}$ with solution $\tilde{b}_{i^*j^*}$ of equation (4); if the initial element $b_{ij}$ is not empty,

set $b_{ij} = \frac{b_{ij} + \tilde{b}_{i^*j^*}}{2}$. Here, $b_{ij}$ is the (i, j) element of matrix B. That is, the update method is:

$$b_{ij}^{\text{updated}} = \begin{cases} \tilde{b}_{i^*j^*}, & \text{if } b_{ij}^{\text{curr}} \text{ is null} \\ \frac{b_{ij}^{\text{curr}} + \tilde{b}_{i^*j^*}}{2}, & \text{if } b_{ij}^{\text{curr}} \text{ is not null} \end{cases} \quad (6)$$

Where $b_{ij}^{\text{updated}}$ is the updated value of $b_{ij}$, $b_{ij}^{\text{curr}}$ is the current value (the value before the update).

In one example, update the coefficient matrix B through the dropout scheme. Select 30 variables randomly from $[F_1(X^t) \cdots F_{100}(X^t)]^T$. Solve the following equation:

$$\tilde{B}_{30 \times 46} Y_{46 \times 110} = [F(X^1) \quad F(X^2) \quad \cdots \quad F(X^{50})]_{30 \times 110}$$

Where $\tilde{B}_{30 \times 46}$ is a submatrix of the coefficient matrix $B_{100 \times 46}$. Update the coefficient matrix $B_{100 \times 46}$ by the following criteria.

If the initial element $b_{ij}$ is empty, directly replace $b_{ij}$ with solution $\tilde{b}_{i^*j^*}$ of equation (4); if the initial element $b_{ij}$ is not empty, set $b_{ij} = \frac{b_{ij} + \tilde{b}_{i^*j^*}}{2}$ . Here, $b_{ij}$ is the (i, j) element of matrix B. The update method is:

$$b_{ij}^{\text{updated}} = \begin{cases} \tilde{b}_{i^*j^*}, & \text{if } b_{ij}^{\text{curr}} \text{ is null} \\ \dfrac{b_{ij}^{\text{curr}} + \tilde{b}_{i^*j^*}}{2}, & \text{if } b_{ij}^{\text{curr}} \text{ is not null} \end{cases}$$

Where $b_{ij}^{\text{updated}}$ is the updated value of $b_{ij}$, $b_{ij}^{\text{curr}}$ is the current value (the value before the update).

Step4: based on the space-time information STI conjugate equation of ARNN constructed in step2, solve the coefficient matrices A and B in space-time information STI conjugate equation by using the encoding and decoding of data, finally obtain the predicted value of the target variable.

The predicted value of the target variable in step4 is obtained by solving the multivariate equations of the coefficient matrix, which is simple, fast and effective.

Solve and determine the coefficient matrices A and B. Repeat step3 above, update matrix $B_{\tilde{D} \times L} = (b_{ij})_{\tilde{D} \times L}$ by iteration. After enough iterations, the convergence condition is satisfied, and $B_{\tilde{D} \times L}$ is finally determined. According to the following formula (7), $A_{L \times \tilde{D}} = (a_{ij})_{\tilde{D} \times L}$ is determined.

$$A_{L \times \tilde{D}} \cdot [F(X) | B_{\tilde{D} \times L}] = [Y_{L \times m} | I_{L \times L}] \quad (7)$$

Where $[F(X) | B_{\tilde{D} \times L}]$ and $[Y_{L \times m} | I_{L \times L}]$ are augmented matrices.

According to formula (2), when both $A_{L \times \tilde{D}}$ and $B_{\tilde{D} \times L}$ are known, solve the unknown part $\{y^{m+1}, y^{m+2}, ..., y^{m+L-1}\}$ of the target variable y, that is the predicted value of wind speed of the target monitoring station in the future L-1 step.

The process of solving $\tilde{b}_{i^*j^*}$ is as follows: formula (4) is equivalent to the following matrix equation

$$\begin{pmatrix} \tilde{b}_{11} & \tilde{b}_{12} & \cdots & \tilde{b}_{1L} \\ \tilde{b}_{21} & \tilde{b}_{22} & \cdots & \tilde{b}_{2L} \\ \vdots & \vdots & \ddots & \vdots \\ \tilde{b}_{k1} & \tilde{b}_{k2} & \cdots & \tilde{b}_{kL} \end{pmatrix}_{k \times L} \begin{pmatrix} y^1 & y^2 & \cdots & y^m \\ y^2 & y^3 & \cdots & y^{m+1} \\ \vdots & \vdots & \ddots & \vdots \\ y^L & y^{L+1} & \cdots & y^{m+L-1} \end{pmatrix}_{L \times m} =$$

$$\begin{pmatrix} F_1(X^1) & F_1(X^2) & \cdots & F_1(X^m) \\ F_2(X^1) & F_2(X^2) & \cdots & F_2(X^m) \\ \vdots & \vdots & \ddots & \vdots \\ F_k(X^1) & F_k(X^2) & \cdots & F_k(X^m) \end{pmatrix}_{k \times m} \quad (8)$$

Formula (8) is expanded as follows:

$$\begin{cases} \tilde{b}_{s1} y^1 + \tilde{b}_{s2} y^2 + \cdots + \tilde{b}_{sL} y^L = F_s(X^1) \\ \tilde{b}_{s1} y^2 + \tilde{b}_{s2} y^3 + \cdots + \tilde{b}_{sL} y^{L+1} = F_s(X^2) \\ \vdots \\ \tilde{b}_{s1} y^{m-L+1} + \tilde{b}_{s2} y^{m-L+2} + \cdots + \tilde{b}_{sL} y^m = F_s(X^{m-L+1}) \\ \tilde{b}_{s1} y^{m-L+2} + \tilde{b}_{s2} y^{m-L+3} + \cdots + \tilde{b}_{s,L-1} y^m + \tilde{b}_{sL} y^{m+1} = F_s(X^{m-L+2}) \\ \vdots \\ \tilde{b}_{s1} y^m + \tilde{b}_{s2} y^{m+1} + \cdots + \tilde{b}_{sL} y^{m+L-1} = F_s(X^m) \end{cases} \quad , s = 1, 2, ..., k \quad (9)$$

Note that $\{y^1, y^2, ..., y^m\}$ is a known series. For any s, the first $m - L + 1$ equations of formula (9) contain $L$ unknowns. When $2L - 1 \leq m$, the number of unknowns is not greater than the number of equations. According to the least square method, element $\tilde{b}_{i^*j^*}$ is obtained by solving the first $m - L + 1$ equations.

In one example, repeat step3, and update matrix $B_{100 \times 46} = (b_{ij})_{100 \times 46}$ by iteration. After enough iterations, the convergence condition is satisfied, and $B_{100 \times 46}$ is finally determined. According to the following formula, $A_{46 \times 100} = (a_{ij})_{46 \times 100}$ is determined.

$$A_{46 \times 100} \cdot [F(X) | B_{100 \times 46}] = [Y_{46 \times 50} | I_{46 \times 46}]$$

Where $[F(X) | B_{100 \times 46}]$ and $[Y_{46 \times 50} | I_{46 \times 46}]$ are augmented matrices.

When both $A_{46 \times 100}$ and $B_{100 \times 46}$ are known, solve the unknown part $\{y^{51}, y^{52}, ..., y^{68}\}$ of the target variable y.

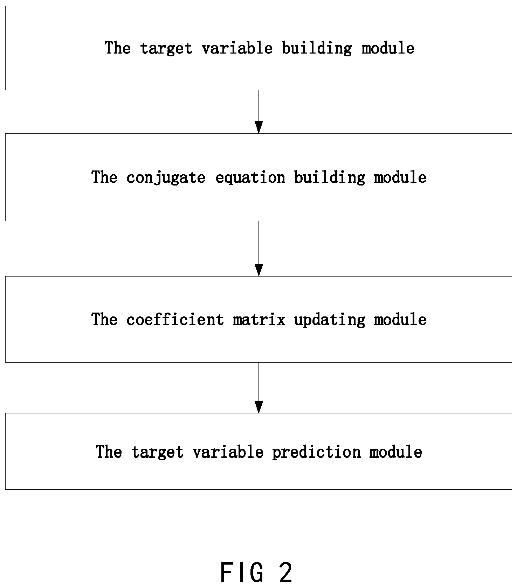

Fig2 shows the principle of an embodiment of the multi-step prediction system of future wind speed based on automatic reservoir neural network of the invention. Please refer to Fig2, the system of this embodiment comprises: target variable building module, conjugate equation building module, coefficient matrix updating module, target variable prediction module.

The target variable building module is used to construct short-term high-dimensional data according to the characteristics of wind speed data input, and determines the target variable to be predicted, the length of the known time series, and the length to be predicted from short-term high-dimensional data.

The target variable building module is further configured as:

given that: a length is $m$, and a dimension is $n$, a high-dimensional wind speed time series is $X^t = [x_1^t, \cdots, x_n^t]'_{t=1,2,...,m}$, a wind speed y of target monitoring station to be predicted is any one of measured speeds of the $x_1, x_2, ..., x_n$ wind speed monitoring stations with similar geographical locations, that is $y = x_k$, $k$ represents the subscript of the target monitoring station, which is any one of 1~n;

select the wind speed monitoring station variable with the most correlation with the target variable $y$: from high-dimensional wind speed time series $X^t$, select relevant variables or eliminate irrelevant variables to improve the performance of ARNN, for the given high-dimensional wind speed time series $X^t$, calculate the mutual information between time series $\{x_i^1, x_i^2, ..., x_i^m\}_{i=1,2,...,k-1,k+1,...,n}$ and $\{y^1, y^2, ..., y^m\}$, and select the D variables $\{x_1, x_2, ..., x_D\}$ ($D \leq n$) with the most correlation with the target variable y.

The conjugate equation building module is used to construct a high-dimensional short-term series matrix, a delay embedding matrix and a space-time information STI conjugate equation, in which the space-time information STI conjugate equation includes coefficient matrix.

The conjugate equation building module is further configured as:
for the high-dimensional short time series matrix $X^t$ composed of the following D relevant variables

$$X^t = \begin{pmatrix} x_1^t \\ x_2^t \\ \vdots \\ x_D^t \end{pmatrix}_{t=1,2,...,m} .$$

By processing of the randomly given neural network F, the matrix $X^t$ is converted into a $\tilde{D}$-dimensional variable $F(X^t) = [F_1(X^t), \cdots, F_{\tilde{D}}(X^t)]'$, and obtain a following space-time information STI conjugate equation of ARNN:

$$\begin{cases} A_{L \times \tilde{D}} [F(X^1) \quad F(X^2) \quad \cdots \quad F(X^m)]_{\tilde{D} \times m} = Y_{L \times m} \\ B_{\tilde{D} \times L} Y_{L \times m} = [F(X^1) \quad F(X^2) \quad \cdots \quad F(X^m)]_{\tilde{D} \times m} \quad , \\ \qquad\qquad A_{L \times \tilde{D}} B_{\tilde{D} \times L} = I_{L \times L} \end{cases}$$

where $Y_{L \times m}$ is delay embedding matrix, $I_{L \times L}$ is identity matrix, the coefficient matrices $A_{L \times \tilde{D}}$ and $B_{\tilde{D} \times L}$ are unknown, future information is the target variable y, that is $\{y^{m+1}, y^{m+2}, ..., y^{m+L-1}\}$;

the delay embedding matrix is constructed as follows:

$$Y_{L \times m} = \begin{pmatrix} y^1 & y^2 & \cdots & y^m \\ y^2 & y^3 & \cdots & y^{m+1} \\ \vdots & \vdots & \ddots & \vdots \\ y^L & y^{L+1} & \cdots & y^{m+L-1} \end{pmatrix}_{L \times m},$$

where L is the number of delayed embedding, $L$-1 is the number of predicted steps.

The coefficient matrix updating module is used to set randomly the weight of neural network F, and by using neural network F as the reservoir stratum for reservoir calculated, update the coefficient matrix in space-time information STI conjugate equation;

The coefficient matrix updating module is further configured as:

select $k$ $(k < \tilde{D})$ variables randomly from $[F_1(X^t) \cdots F_{\tilde{D}}(X^t)]^T$, and solve the following equation:

$$\tilde{A}_{L \times k}[F(X^1) \quad F(X^2) \quad \cdots \quad F(X^m)]_{k \times m} = Y_{L \times m},$$

$$\tilde{B}_{k \times L} Y_{L \times m} = [F(X^1) \quad F(X^2) \quad \cdots \quad F(X^m)]_{k \times m},$$

$$\tilde{A}_{L \times k} \tilde{B}_{k \times L} = I_{L \times L},$$

where $\tilde{A}_{L \times k}$ is a submatrix of the coefficient matrix $A_{L \times \tilde{D}}$, $\tilde{B}_{k \times L}$ is a submatrix of the coefficient matrix $B_{\tilde{D} \times L}$;
update the coefficient matrix $B_{\tilde{D} \times L}$ by the following criteria:
if the initial element $b_{ij}$ is empty, directly replace $b_{ij}$ with solution $\tilde{b}_{i^*j^*}$ of equation $\tilde{B}_{k \times L} Y_{L \times m} = [F(X1) \ F(X^2) \cdots F(X^m)]$
$_{k \times m}$; if the initial element $b_{ij}$ is not empty, set $b_{ij} = \frac{b_{ij} + \tilde{b}_{i^*j^*}}{2}$ .

The target variable prediction module is used to solve the coefficient matrix in space-time information STI conjugate equation based on the space-time information STI conjugate equation of ARNN constructed by using the encoding and decoding of data, and finally obtains the predicted value of the target variable to be predicted.
The target variable prediction module is further configured as:

solve and determine the coefficient matrices A and B: repeat the above processing of coefficient matrix updating module, update matrix $B_{\tilde{D} \times L} = (b_{ij})_{\tilde{D} \times L}$ by iteration. When a certain iteration meets the setting convergence conditions, the coefficient matrix $B_{\tilde{D} \times L}$ is finally determined, and $A_{L \times \tilde{D}} = (a_{ij})_{\tilde{D} \times L}$ is determined according to the following formula:

$$A_{L \times \tilde{D}} \cdot [F(X)|B_{\tilde{D} \times L}] = [Y_{L \times m}|I_{L \times L}],$$

where $[F(X)|B_{\tilde{D} \times L}]$ and $[Y_{L \times m}|I_{L \times L}]$ are augmented matrices;
when the coefficient matrices A and B are known, solve the unknown part of the target variable y.

Although the above methods are illustrated and described as a series of actions in order to simplify the explanation, it should be understood and comprehend that these methods are not limited by the order of actions, because according to one or more embodiments, some actions may occur in different order and/or concurrently with other actions that are illustrated and described herein or not illustrated and described herein but can be understood by those skilled in the art.
Those of skill in the art would understand that information and signals may be represented using any of a variety of different technologies and techniques. For example, data, instructions, commands, information, signals, bits, symbols, and chips that may be referenced throughout the above description may be represented by voltages, currents, electromagnetic waves, magnetic fields or particles, optical fields or particles, or any combination thereof.

Those of skill would further appreciate that the various illustrative logical blocks, modules, circuits, and algorithm steps described in connection with the embodiments disclosed herein may be implemented as electronic hardware, computer software, or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present invention.

The various illustrative logical blocks, modules, and circuits described in connection with the embodiments disclosed herein may be implemented or performed with a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

The steps of a method or algorithm described in connection with the embodiments disclosed herein may be embodied directly in hardware, in a software module executed by a processor, or in a combination of the two. A software module may reside in RAM memory, flash memory, ROM memory, EPROM memory, EEPROM memory, registers, hard disk, a removable disk, a CD-ROM, or any other form of storage medium known in the art. An exemplary storage medium is coupled to the processor such the processor can read information from, and write information to, the storage medium. In the alternative, the storage medium may be integral to the processor. The processor and the storage medium may reside in an ASIC. The ASIC may reside in a user terminal. In the alternative, the processor and the storage medium may reside as discrete components in a user terminal.

In one or more exemplary embodiments, the functions described may be implemented in hardware, software, firmware, or any combination thereof. If implemented in software as a computer program product, the functions may be stored on or transmitted over as one or more instructions or code on a computer-readable medium. Computer-readable media includes both computer storage media and communication media including any medium that facilitates transfer of a computer program from one place to another. A storage media may be any available media that can be accessed by a computer. By way of example, and not limitation, such computer-readable media can comprise RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Also, any connection is properly termed a computer-readable medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. Disk and disc, as used herein, includes compact disc (CD), laser disc, optical disc, digital versatile disc (DVD), floppy disk and blu-ray disc where disks usually reproduce data magnetically, while discs reproduce data optically with lasers. Combinations of the above should also be included within the scope of computer-readable media.

The previous description of the disclosed embodiments is provided to enable any person skilled in the art to make or use the present invention. Various modifications to these embodiments will be readily apparent to those skilled in the art, and the generic principles defined herein may be applied to other embodiments without departing from the spirit or scope of the invention. Thus, the present invention is not intended to be limited to the embodiments shown herein but is to be accorded the widest scope consistent with the principles and novel features disclosed herein.

**Claims**

1. A multi-step prediction method of future wind speed based on automatic reservoir neural network, comprising:

   step1: according to the characteristics of wind speed data input, constructing short-term high-dimensional data, and determining a target variable to be predicted, a length of the known time series, and a length to be predicted from the short-term high-dimensional data;
   step2: constructing a high-dimensional short-term series matrix, a delay embedding matrix and a space-time information STI conjugate equation, wherein the space-time information STI conjugate equation includes a coefficient matrix;

step3: randomly setting a weight of neural network F, and by using neural network F as the reservoir stratum for reservoir calculation, updating the coefficient matrix in the space-time information STI conjugate equation;

step4: based on the space-time information STI conjugate equation of ARNN constructed in step2, solving the coefficient matrix in space-time information STI conjugate equation by using encoding and decoding of data, and finally obtaining a predicted value of the target variable to be predicted.

2. The multi-step prediction method of future wind speed based on automatic reservoir neural network of claim 1, wherein the step1 further comprises:

given that the length is $m$, the dimension is $n$, and a high-dimensional wind speed time series is $\tilde{X^t} = [x_1^t, \cdots, x_n^t]'_{t=1,2,\ldots,m}$ a wind speed y of target monitoring station to be predicted is any one of measured speeds of $x_1, x_2, \ldots, x_n$ wind speed monitoring stations with similar geographical locations, that is y = $x_k$, $k$ represents a subscript of the target monitoring station, which is any one of 1-n;

selecting the wind speed monitoring station variable with the most correlation with the target variable y: from the high-dimensional wind speed time series $X^t$, selecting relevant variables or eliminating irrelevant variables to improve the performance of ARNN, for the given high-dimensional wind speed time series $X^t$, calculating mutual information between time series $\{x_i^1, x_i^2, \ldots, x_i^m\}_{i=1,2,\ldots,k-1,k+1,\ldots,n}$ and $\{y^1, y^2, \ldots, y^m\}$, and selecting the D variables $\{x_1, x_2, \ldots, x_D\}$ ($D \leq$ n) with the most correlation with the target variable y.

3. The multi-step prediction method of future wind speed based on automatic reservoir neural network of claim 2, wherein the step2 further comprises:

for the high-dimensional short time series matrix $X^t$ composed of the following D relevant variables

$$X^t = \begin{pmatrix} x_1^t \\ x_2^t \\ \vdots \\ x_D^t \end{pmatrix}_{t=1,2,\ldots,m} .$$

By processing of a randomly given neural network F, converting the matrix $X^t$ into a 5-dimensional variable $F(X^t)$ = $[F_1(X^t), \cdots, F_{\tilde{D}}(X^t)]'$, and obtaining a following space-time information STI conjugate equation of ARNN:

$$\begin{cases} A_{L \times \tilde{D}}[F(X^1) \quad F(X^2) \quad \cdots \quad F(X^m)]_{\tilde{D} \times m} = Y_{L \times m} \\ B_{\tilde{D} \times L} Y_{L \times m} = [F(X^1) \quad F(X^2) \quad \cdots \quad F(X^m)]_{\tilde{D} \times m} \quad , \\ A_{L \times \tilde{D}} B_{\tilde{D} \times L} = I_{L \times L} \end{cases}$$

wherein $Y_{L \times m}$ is a delay embedding matrix, $I_{L \times L}$ is in identity matrix, the coefficient matrices $A_{L \times \tilde{D}}$ and $B_{\tilde{D} \times L}$ are unknown, future information is the target variable y, that is $\{y^{m+1}, y^{m+2}, \ldots, y^{m+L-1}\}$;

constructing the delay embedding matrix as follows:

$$Y_{L \times m} = \begin{pmatrix} y^1 & y^2 & \cdots & y^m \\ y^2 & y^3 & \cdots & y^{m+1} \\ \vdots & \vdots & \ddots & \vdots \\ y^L & y^{L+1} & \cdots & y^{m+L-1} \end{pmatrix}_{L \times m} ,$$

wherein L is the number of delayed embedding, $L$-1 is the number of predicted steps.

4. The multi-step prediction method of future wind speed based on automatic reservoir neural network of claim 3, wherein the step3 further comprises:

selecting $k$ ($k < 5$) variables randomly from $[F_1(X^t) \cdots F_{\tilde{D}}(X^t)]^T$, and solving the following equation:

$$\tilde{A}_{L \times k}[F(X^1) \quad F(X^2) \quad \cdots \quad F(X^m)]_{k \times m} = Y_{L \times m},$$

$$\tilde{B}_{k \times L} Y_{L \times m} = [F(X^1) \quad F(X^2) \quad \cdots \quad F(X^m)]_{k \times m},$$

$$\tilde{A}_{L \times k} \tilde{B}_{k \times L} = I_{L \times L},$$

wherein $\tilde{A}_{L \times k}$ is a submatrix of the coefficient matrix $A_{L \times \tilde{D}}$, $\tilde{B}_{k \times L}$ is a submatrix of the coefficient matrix $B_{\tilde{D} \times L}$;
updating the coefficient matrix $B_{\tilde{D} \times L}$ by the following criteria:

if the initial element $b_{ij}$ is empty, directly replacing $b_{ij}$ with solution $\tilde{b}_{i^*j^*}$ of equation $\tilde{B}_{k \times L} Y_{L \times m}$ = [F(X1) F(X2) ...

$F(X''^1)]_{kx''1}$; if the initial element $b_{ij}$ is not empty, setting $b_{ij} = \frac{b_{ij} + \tilde{b}_{i^*j^*}}{2}$ .

5. The multi-step prediction method of future wind speed based on automatic reservoir neural network of claim 4, wherein the step4 further comprises:

solving and determining the coefficient matrices A and B: repeating step3 above, updating matrix $B_{\tilde{D} \times L} = (b_{ij})_{\tilde{D} \times L}$ by iteration, when a certain iteration meets the setting convergence conditions, the coefficient matrix $B_{\tilde{D} \times L}$ is finally determined, and $A_{L \times \tilde{D}} = (a_{ij})_{\tilde{D} \times L}$ is determined according to the following formula:

$$A_{L \times \tilde{D}} \cdot [F(X)|B_{\tilde{D} \times L}] = [Y_{L \times m}|I_{L \times L}],$$

wherein $[F(X)|B_{\tilde{D} \times L}]$ and $[Y_{L \times m}|I_{L \times L}]$ are augmented matrices;
when the coefficient matrices A and B are known, solving the unknown part of the target variable y.

6. A multi-step prediction system of future wind speed based on automatic reservoir neural network, comprising:

a target variable building module, according to the characteristics of wind speed data input, constructs short-term high-dimensional data, and determines a target variable to be predicted, a length of the known time series, and a length to be predicted from the short-term high-dimensional data;
a conjugate equation building module, constructs a high-dimensional short-term series matrix, a delay embedding matrix and a space-time information STI conjugate equation, wherein the space-time information STI conjugate equation includes a coefficient matrix;
a coefficient matrix updating module, randomly sets a weight of neural network F, and by using neural network F as the reservoir stratum for reservoir calculation, updates the coefficient matrix in the space-time information STI conjugate equation;
a target variable prediction module, based on the space-time information STI conjugate equation of ARNN constructed, solves the coefficient matrix in space-time information STI conjugate equation by using encoding and decoding of data, and finally obtains a predicted value of the target variable to be predicted.

7. The multi-step prediction system of future wind speed based on automatic reservoir neural network of claim 6, wherein the target variable building module is further configured to:

given that the length is $m$, the dimension is $n$, and a high-dimensional wind speed time series is $X^t = [x_1^t, \quad \cdots, \quad x_n^t]'_{t=1,2,...,m}$ , wind speed y of target monitoring station to be predicted is any one of measured speeds of $x_1, x_2, ..., x_n$ wind speed monitoring stations with similar geographical locations, that is y = $x_k$, $k$ represents a subscript of the target monitoring station, which is any one of 1-n;

select the wind speed monitoring station variable with the most correlation with the target variable y: from the high-dimensional wind speed time series $X^t$, select relevant variables or eliminate irrelevant variables to improve the performance of ARNN, for the given high-dimensional wind speed time series $X^t$, calculate mutual information between time series $\{x_i^1, x_i^2, \ldots, x_i^m\}_{i=1,2,\ldots,k-1,k+1,\ldots,n}$ and $\{y^1, y^2, \ldots, y^m\}$, and select the $D$ variables $\{x_1, x_2, \ldots, x_D\}$ $(D \leq n)$ with the most correlation with the target variable y.

8. The multi-step prediction system of future wind speed based on automatic reservoir neural network of claim 7, wherein the conjugate equation building module is further configured to:

for the high-dimensional short time series matrix $X^t$ composed of the following D relevant variables

$$X^t = \begin{pmatrix} x_1^t \\ x_2^t \\ \vdots \\ x_D^t \end{pmatrix}_{t=1,2,\ldots,m} .$$

by processing of a randomly given neural network F, the matrix $X^t$ is converted into a $\tilde{D}$-dimensional variable $F(X^t) = [F_1(X^t), \cdots, F_{\tilde{D}}(X^t)]'$, and obtain a following space-time information STI conjugate equation of ARNN:

$$\begin{cases} A_{L \times \tilde{D}}[F(X^1) \quad F(X^2) \quad \cdots \quad F(X^m)]_{\tilde{D} \times m} = Y_{L \times m} \\ B_{\tilde{D} \times L} Y_{L \times m} = [F(X^1) \quad F(X^2) \quad \cdots \quad F(X^m)]_{\tilde{D} \times m} \quad , \\ A_{L \times \tilde{D}} B_{\tilde{D} \times L} = I_{L \times L} \end{cases}$$

wherein $Y_{L \times m}$ is a delay embedding matrix, $I_{L \times L}$ is identity matrix, the coefficient matrices $A_{L \times \tilde{D}}$ and $B_{\tilde{D} \times L}$ are unknown, future information is the target variable $y$, that is $\{y^{m+1}, y^{m+2}, \ldots, y^{m+L-1}\}$;
construct the delay embedding matrix as follows:

$$Y_{L \times m} = \begin{pmatrix} y^1 & y^2 & \cdots & y^m \\ y^2 & y^3 & \cdots & y^{m+1} \\ \vdots & \vdots & \ddots & \vdots \\ y^L & y^{L+1} & \cdots & y^{m+L-1} \end{pmatrix}_{L \times m} ,$$

wherein $L$ is the number of delayed embedding, $L$-1 is the number of predicted steps.

9. The multi-step prediction system of future wind speed based on automatic reservoir neural network of claim 8, wherein the coefficient matrix updating module is further configured to:

select $k$ $(k < \tilde{D})$ variables randomly from $[F_1(X^t) \cdots F_{\tilde{D}}(X^t)]^T$, and solve the following equation:

$$\tilde{A}_{L \times k}[F(X^1) \quad F(X^2) \quad \cdots \quad F(X^m)]_{k \times m} = Y_{L \times m},$$

$$\tilde{B}_{k \times L} Y_{L \times m} = [F(X^1) \quad F(X^2) \quad \cdots \quad F(X^m)]_{k \times m},$$

$$\tilde{A}_{L \times k} \tilde{B}_{k \times L} = I_{L \times L},$$

wherein $\tilde{A}_{L \times k}$ is a submatrix of the coefficient matrix $A_{L \times \tilde{D}}$, $\tilde{B}_{k \times L}$ is a submatrix of the coefficient matrix $B_{\tilde{D} \times L}$;
update the coefficient matrix $B_{\tilde{D} \times L}$ by the following criteria:

if the initial element $b_{ij}$ is empty, directly replace $b_{ij}$ with solution $\tilde{b}_{i^*j^*}$ in equation $\tilde{B}_{k \times L} Y_{L \times m} = [F(X^1) \ F(X^2) \ldots$

$F(X^m)]_{k \times m}$; if the initial element $b_{ij}$ is not empty, set $b_{ij} = \frac{b_{ij} + \tilde{b}_{i^*j^*}}{2}$ .

**10.** The multi-step prediction system of future wind speed based on automatic reservoir neural network of claim 9, wherein the target variable prediction module is further configured to:

solve and determine the coefficient matrices A and B: repeat step3 above, update matrix $B_{\tilde{D} \times L} = (b_{ij})_{\tilde{D} \times L}$ by iteration, when a certain iteration meets the setting convergence conditions, the coefficient matrix $B_{\tilde{D} \times L}$ is finally determined, and $A_{L \times \tilde{D}} = (a_{ij})_{\tilde{D} \times L}$ is determined according to the following formula:

$$A_{L \times \tilde{D}} \cdot [F(X)|B_{\tilde{D} \times L}] = [Y_{L \times m}|I_{L \times L}],$$

wherein $[F(X)|B_{\tilde{D} \times L}]$ and $[Y_{L \times m}|I_{L \times L}]$ are augmented matrices;
when the coefficient matrices A and B are known, solve the unknown part of the target variable $y$.

BEGIN

According to the characteristics of wind speed data input, construct short-term high-dimensional data, determine the target variable to be predicted, the length of the known time series, and the length to be predicted

Construct high-dimensional short-term series matrix, delay embedding matrix and space-time information STI conjugate equation, wherein the space-time information STI conjugate equation includes coefficient matrix

Randomly set the weight of neural network F, and by using neural network F as the reservoir stratum for reservoir calculation, update the coefficient matrix in space-time information STI conjugate equation

Based on the space-time information STI conjugate equation of ARNN constructed in step2, solve the coefficient matrices A and B in space-time information STI conjugate equation by using the encoding and decoding of data, and finally obtain the predicted value of the target variable to be predicted

END

FIG 1

The target variable building module

The conjugate equation building module

The coefficient matrix updating module

The target variable prediction module

FIG 2

<table>
<tr><td colspan="2">**INTERNATIONAL SEARCH REPORT**</td><td colspan="2">International application No.<br>**PCT/CN2021/105931**</td></tr>
</table>

**A. CLASSIFICATION OF SUBJECT MATTER**

G06Q 10/04(2012.01)i

According to International Patent Classification (IPC) or to both national classification and IPC

**B. FIELDS SEARCHED**

Minimum documentation searched (classification system followed by classification symbols)

G06Q; G06N; G06F

Documentation searched other than minimum documentation to the extent that such documents are included in the fields searched

Electronic data base consulted during the international search (name of data base and, where practicable, search terms used)

CNKI, CNPAT, WPI, EPODOC, IEEE: 自动, 储层, 多步, 预测, 风速, 未来, 短时, 高维, 神经网络, auto+, reservoir, step, predict, forcast, wind, speed, future, short, term, high, dimensional, neural, network

**C. DOCUMENTS CONSIDERED TO BE RELEVANT**

| Category* | Citation of document, with indication, where appropriate, of the relevant passages | Relevant to claim No. |
|---|---|---|
| A | CN 107895202 A (TIANJIN UNIVERSITY) 10 April 2018 (2018-04-10)<br>claims 1-7 | 1-10 |
| A | CN 111242377 A (CHONGQING UNIVERSITY) 05 June 2020 (2020-06-05)<br>entire document | 1-10 |
| A | CN 107292447 A (GUODIAN UNITED POWER TECHNOLOGY CO., LTD.) 24 October 2017 (2017-10-24)<br>entire document | 1-10 |
| A | CN 108615089 A (NORTHEAST ELECTRIC POWER UNIVERSITY) 02 October 2018 (2018-10-02)<br>entire document | 1-10 |
| A | US 2020063710 A1 (BLUWAVE INC.) 27 February 2020 (2020-02-27)<br>entire document | 1-10 |
| A | WO 2013033284 A1 (ONSEMBLE, L.L.C.) 07 March 2013 (2013-03-07)<br>entire document | 1-10 |

☐ Further documents are listed in the continuation of Box C.    ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **23 September 2021** | **14 October 2021** |

| Name and mailing address of the ISA/CN | Authorized officer |
|---|---|
| **China National Intellectual Property Administration (ISA/ CN)**<br>**No. 6, Xitucheng Road, Jimenqiao, Haidian District, Beijing 100088**<br>**China** | |
| Facsimile No. **(86-10)62019451** | Telephone No. |

Form PCT/ISA/210 (second sheet) (January 2015)

INTERNATIONAL SEARCH REPORT
Information on patent family members

International application No.

**PCT/CN2021/105931**

| Patent document cited in search report | | | Publication date (day/month/year) | Patent family member(s) | | | Publication date (day/month/year) |
|---|---|---|---|---|---|---|---|
| CN | 107895202 | A | 10 April 2018 | None | | | |
| CN | 111242377 | A | 05 June 2020 | None | | | |
| CN | 107292447 | A | 24 October 2017 | None | | | |
| CN | 108615089 | A | 02 October 2018 | None | | | |
| US | 2020063710 | A1 | 27 February 2020 | None | | | |
| WO | 2013033284 | A1 | 07 March 2013 | US | 2012029712 | A1 | 02 February 2012 |

Form PCT/ISA/210 (patent family annex) (January 2015)